# EUROPEAN PATENT APPLICATION

(11) **EP 4 481 675 A1**
(43) Date of publication of application: **25.12.2024**
(21) Application number: 22926973.3
(22) Date of filing: 15.02.2022
(51) Int. Cl.: G06T 7/00

(54) **INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: AKASHI, Ryuichi, Tokyo 108-8001 (JP); TOIZUMI, Takahiro, Tokyo 108-8001 (JP); SHOJI, Yuho, Tokyo 108-8001 (JP)
(74) Representative: Betten & Resch
(86) International application number: PCT/JP2022/005913
(87) International publication number: WO 2023/157070

(57) **Abstract**

An information processing apparatus includes: a deterioration degree calculation unit that calculates a deterioration degree in quality of an image; a deterioration factor classification unit that classifies a deterioration factor that is a factor of deterioration in the quality of the image; and a quality score calculation unit that calculates a quality score indicating the quality of the image, on the basis of the deterioration degree and the deterioration factor. According to such an information processing apparatus, the quality of the image can be properly evaluated.

## Description

### Technical Field

This disclosure relates to technical fields of an information processing apparatus, an information processing method, and a recording medium.

### Background Art

A known apparatus of this type evaluates quality of an image acquired by imaging a target. For example, Patent Literature 1 discloses a technique/technology of segmenting an eye image and estimating the quality thereof, by using a convolutional neural network. Patent Literature 2 discloses that a cause of the image deterioration that causes deterioration in image quality is identified when the image quality of an eye image is evaluated.

As another related technology/technique, for example, Patent Literature 3 discloses that weight information is generated from the quality of a plurality of pieces of imaging data.

### Citation List

### Patent Literature

Patent Literature 1: JP2020-144926A
Patent Literature 2: JP2005-071009A
Patent Literature 3: International Publication No. WO2021/176544

### Summary

### Technical Problem

This disclosure aims to improve the techniques/technologies disclosed in Citation List.

### Solution to Problem

An information processing apparatus according to an example aspect of this disclosure includes: a deterioration degree calculation unit that calculates a deterioration degree in quality of an image; a deterioration factor classification unit that classifies a deterioration factor that is a factor of deterioration in the quality of the image; and a quality score calculation unit that calculates a quality score indicating the quality of the image, on the basis of the deterioration degree and the deterioration factor.

An information processing method according to an example aspect of this disclosure includes: calculating a deterioration degree in quality of an image; classifying a deterioration factor that is a factor of deterioration in the quality of the image; and calculating a quality score indicating the quality of the image, on the basis of the deterioration degree and the deterioration factor.

A recording medium according to an example aspect of this disclosure is a recording medium on which a computer program that allows at least one computer to execute an information processing method is recorded, the information processing method including: calculating a deterioration degree in quality of an image; classifying a deterioration factor that is a factor of deterioration in the quality of the image; and calculating a quality score indicating the quality of the image, on the basis of the deterioration degree and the deterioration factor.

### Brief Description of Drawings

[FIG. 1] FIG. 1 is a block diagram illustrating a hardware configuration of an information processing apparatus according to a first example embodiment.
[FIG. 2] FIG. 2 is a block diagram illustrating a functional configuration of the information processing apparatus according to the first example embodiment.
[FIG. 3] FIG. 3 is a flowchart illustrating a flow of operation of the information processing apparatus according to the first example embodiment.
[FIG. 4] FIG. 4 is a block diagram illustrating a functional configuration of an information processing apparatus according to a second example embodiment.
[FIG. 5] FIG. 5 is a flowchart illustrating a flow of operation of the information processing apparatus according to the second example embodiment.
[FIG. 6] FIG. 6 is a block diagram illustrating a configuration related to learning of a weight setting unit.
[FIG. 7] FIG. 7 is a flowchart illustrating a flow of a learning operation of the weight setting unit.
[FIG. 8] FIG. 8 is a flowchart illustrating a flow of operation of an information processing apparatus according to a third example embodiment.
[FIG. 9] FIG. 9 is a flowchart illustrating a flow of operation of an information processing apparatus according to a fourth example embodiment.
[FIG. 10] FIG. 10 is a block diagram illustrating a functional configuration of an information processing apparatus according to a fifth example embodiment.
[FIG. 11] FIG. 11 is a block diagram illustrating a functional configuration of an information processing apparatus according to a sixth example embodiment.
[FIG. 12] FIG. 12 is a flowchart illustrating a flow of operation of the information processing apparatus according to the sixth example embodiment.
[FIG. 13] FIG. 13 is a block diagram illustrating a functional configuration of an information processing apparatus according to a seventh example embodiment.
[FIG. 14] FIG. 14 is a flowchart illustrating a flow of operation of the information processing apparatus according to the seventh example embodiment.
[FIG. 15] FIG. 15 is a flowchart illustrating a flow of authentication operation by an information processing apparatus according to an eighth example embodiment.
[FIG. 16] FIG. 16 is a flowchart illustrating a flow of an authentication operation by an information processing apparatus according to a ninth example embodiment.
[FIG. 17] FIG. 17 is a block diagram illustrating a functional configuration of an information processing apparatus according to a tenth example embodiment.
[FIG. 18] FIG. 18 is a flowchart illustrating a flow of operation of the information processing apparatus according to the tenth example embodiment.
[FIG. 19] FIG. 19 is a flowchart illustrating a flow of operation of an information processing apparatus according to an eleventh example embodiment.
[FIG. 20] FIG. 20 is a flowchart illustrating a flow of operation of an information processing apparatus according to a twelfth example embodiment.

### Description of Example Embodiments

Hereinafter, an information processing apparatus, an information processing method, and a recording medium according to example embodiments will be described with reference to the drawings.

### <First Example Embodiment>

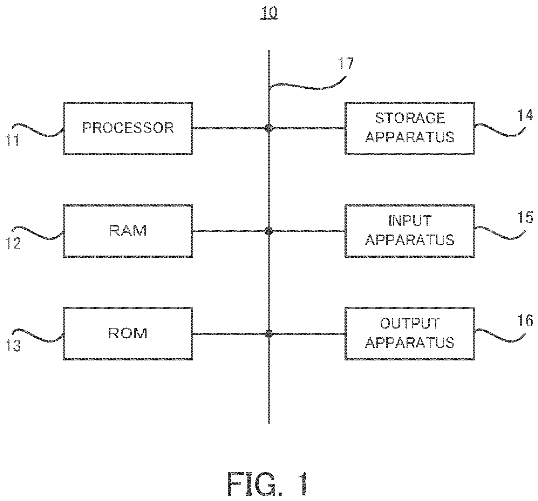

An information processing apparatus according to a first example embodiment will be described with reference to FIG. 1 to FIG. 3.

### (Hardware Configuration)

First, with reference to FIG. 1, a hardware configuration of an information processing apparatus according to the first example embodiment will be described. FIG. 1 is ablock diagram illustrating the hardware configuration of the information processing apparatus according to the first example embodiment.

As illustrated in FIG. 1, an information processing apparatus 10 according to the first example embodiment includes a processor 11, a RAM (Random Access Memory) 12, a ROM (Read Only Memory) 13, and a storage apparatus 14. The information processing apparatus 10 may further include an input apparatus 15 and an output apparatus 16. The processor 11, the RAM 12, the ROM 13, the storage apparatus 14, the input apparatus 15, and the output apparatus 16 are connected through a data bus 17.

The processor 11 reads a computer program. For example, the processor 11 is configured to read a computer program stored by at least one of the RAM 12, the ROM 13 and the storage apparatus 14. Alternatively, the processor 11 may read a computer program stored in a computer-readable recording medium, by using a not-illustrated recording medium reading apparatus. The processor 11 may acquire (i.e., may read) a computer program from a not-illustrated apparatus disposed outside the information processing apparatus 10, through a network interface. The processor 11 controls the RAM 12, the storage apparatus 14, the input apparatus 15, and the output apparatus 16 by executing the read computer program. Especially in the present example embodiment, when the processor 11 executes the read computer program, a functional block for calculating a quality score of an image is realized or implemented in the processor 11. That is, the processor 11 may function as a controller for executing each control in the information processing apparatus 10.

The processor 11 may be configured as, for example, a CPU (Central Processing Unit), a GPU (Graphics Processing Unit), a FPGA (Field-Programmable Gate Array), a DSP (Demand-Side Platform), or an ASIC (Application Specific Integrated Circuit). The processor 11 may be one of them, or may use a plurality of them in parallel.

The RAM 12 temporarily stores the computer program to be executed by the processor 11. The RAM 12 temporarily stores data that are temporarily used by the processor 11 when the processor 11 executes the computer program. The RAM 12 may be, for example, a D-RAM (Dynamic Random Access Memory) or a SRAM (Static Random Access Memory). Furthermore, another type of volatile memory may also be used instead of the RAM 12.

The ROM 13 stores the computer program to be executed by the processor 11. The ROM 13 may otherwise store fixed data. The ROM 13 may be, for example, a P-ROM (Programmable Read Only Memory) or an EPROM (Erasable Read Only Memory). Furthermore, another type of non-volatile memory may also be used instead of the ROM 13.

The storage apparatus 14 stores data that are stored by the information processing apparatus 10 for a long time. The storage apparatus 14 may operate as a temporary/transitory storage apparatus of the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing apparatus 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example.

The output apparatus 16 is an apparatus that outputs information about the information processing apparatus 10 to the outside. For example, the output apparatus 16 may be a display apparatus (e.g., a display) that is configured to display the information about the information processing apparatus 10. The output apparatus 16 may be a speaker or the like that is configured to audio-output the information about the information processing apparatus 10. The output apparatus 16 may be configured as a portable terminal such as a smartphone and a tablet. The output apparatus 16 may be an apparatus that outputs information in a form other than an image. For example, the output apparatus 16 may be a speaker that audio-outputs the information about the information processing apparatus 10.

Although FIG. 1 illustrates an example of the information processing apparatus 10 including a plurality of apparatuses, all or a part of the functions may be realized or implemented as a single apparatus. In such a case, the information processing apparatus 10 may include, for example, only the processor 11, the RAM 12, and the ROM 13. The other components (i.e., the storage apparatus 14, the input apparatus 15, and the output apparatus 16) may be provided in an external apparatus connected to the information processing apparatus 10, for example. In addition, in the information processing apparatus 10, a part of an arithmetic function may be realized by an external apparatus (e.g., an external server or cloud, etc.).

### (Functional Configuration)

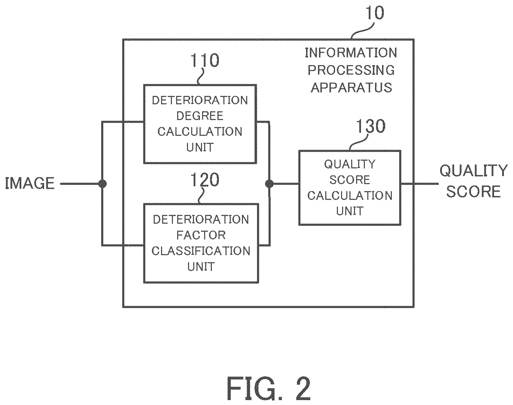

Next, with reference to FIG. 2, a functional configuration of the information processing apparatus 10 according to the first example embodiment will be described. FIG. 2 is a block diagram illustrating the functional configuration of the information processing apparatus according to the first example embodiment.

As illustrated in FIG. 2, the information processing apparatus 10 according to the first example embodiment includes, as components for realizing the functions thereof, a deterioration degree calculation unit 110, a deterioration factor classification unit 120, and a quality score calculation unit 130. Each of the deterioration degree calculation unit 110, the deterioration factor classification unit 120, and the quality score calculation unit 130 may be a processing block realized or implemented by the processor 11 (see FIG. 1), for example. Each of the deterioration degree calculation unit 110, the deterioration factor classification unit 120, and the quality score calculation unit 130 may be configured as a neural network.

The deterioration degree calculation unit 110 is configured to calculate a deterioration degree of an image. The "deterioration degree" here indicates to what extent quality of the image is deteriorated. There is no particular limitation on a specific method of calculating the deterioration degree, but the deterioration degree calculation unit 110 may calculate the deterioration degree by using a feature point extracted from the image, for example. More specifically, an iris feature point extracted from an iris image may be used to calculate an eye opening degree, as the deterioration degree. The "eye opening degree" here is a value indicating to what extent an eye is open, and may be calculated as a value when an eye closing state (a state where the eye is fully closed) is set as 0% and an eye opening state (a state where the eye is open at the maximum) is set as 100%, for example. Alternatively, the deterioration degree calculation unit 110 may input an image to a previously leaned/trained neural network, and as an output thereof, the deterioration degree calculation unit 110 may acquire the deterioration degree. The deterioration degree may include a plurality of indexes that cause the deterioration in the quality of the image.

The deterioration factor classification unit 120 is configured to classify a deterioration factor of the image. The deterioration factor classification unit 120 may be configured to select an appropriate deterioration factor of the image from a plurality of deterioration factors prepared in advance, for example. More specifically, the deterioration factor classification unit 120 may be configured to output a deterioration factor label indicating a type of the deterioration factor and a deterioration factor label likelihood indicating a likelihood of each deterioration factor. The deterioration factor label and the deterioration factor label likelihood may be obtained by inputting the image to the previously leaned/trained neural network and as an output therefrom.

There is no particular limitation on the type of the deterioration factor, but a deterioration factor of an iris image used for iris authentication may be classified into blur deterioration, occlusion deterioration, and other deterioration, for example. More specifically, the blur deterioration may include focus blur, motion blur, or the like. The occlusion deterioration may include narrow eyes, eyeglass reflection occlusion, iris internal reflection occlusion, eyeglass frame occlusion, out frame, pupil size change, eyelash occlusion, front hair occlusion, or the like. The other deterioration may include insufficient resolution, oblique light, contact lenses, off angles, sensor noise, or the like.

The quality score calculation unit 130 is configured to calculate a quality score of the image. More specifically, the quality score calculation unit 130 is configured to calculate the quality score on the basis of the deterioration degree calculated by the deterioration degree calculation unit 110 and the deterioration factor classified by the deterioration factor classification unit 120. Therefore, the quality score in the present example embodiment is calculated as an integrated score that takes into account both the deterioration degree and the deterioration factor of the image. The quality score calculation unit 130 may be configured to input the deterioration degree, the deterioration factor label, and the deterioration factor label likelihood to the previously leaned/trained neural network, and to consequently acquire the quality score.

### (Flow of Operation)

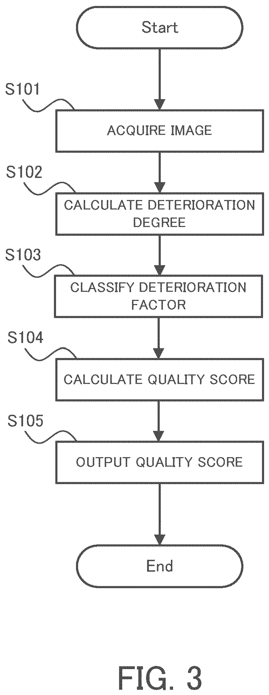

Next, with reference to FIG. 3, a flow of operation of the information processing apparatus 10 according to the first example embodiment (specifically, a flow until the quality score of the image is calculated) will be described. FIG. 3 is a flowchart illustrating the flow of the operation of the information processing apparatus according to the first example embodiment.

As illustrated in FIG. 3, when the operation of the information processing apparatus 10 according to the first example embodiment is started, first, each of the deterioration degree calculation unit 110 and the deterioration cause classification unit 120 acquires the image for calculating the quality score (step S101). The acquired image may be one captured by a camera, or may be one stored in a storage or the like, for example.

Subsequently, the deterioration degree calculation unit 110 calculates the deterioration degree of the acquired image (step S102). In addition, the deterioration factor classification unit 120 classifies the deterioration factor of the acquired image (step 5103). The step S102 and step S103 may be performed in reverse order, or may be performed in parallel simultaneously.

Subsequently, the quality score calculation unit 130 calculates the quality score on the basis of the deterioration degree calculated by the deterioration degree calculation unit 110 and the deterioration factor classified by the deterioration factor classification unit 120 (step S104). Then, the quality score calculation unit 130 outputs the calculated quality score (step S105). An output destination and a method of using the quality score will be described in detail in another example embodiment later.

### (Technical Effect)

Next, a technical effect obtained by the information processing apparatus 10 according to the first example embodiment will be described.

As described in FIG. 1 to FIG. 3, in the information processing apparatus 10 according to the first example embodiment, the quality score is calculated on the basis of the deterioration degree and the deterioration factor of the image. In this way, both the deterioration degree and the deterioration factor are considered, and it is thus possible to calculate a more appropriate quality score, as compared with a case where the quality score is calculated based only on the deterioration degree of the image, for example. In other words, it is possible to more properly evaluate the quality of the image.

### <Second Example Embodiment>

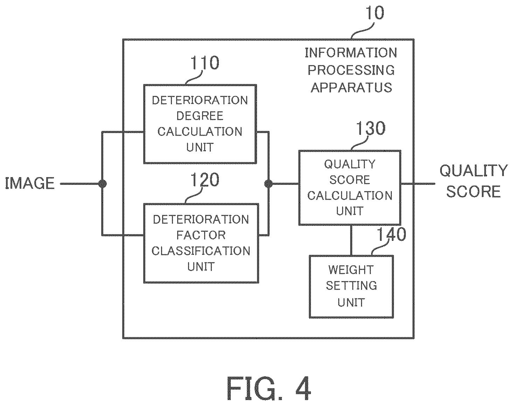

The information processing apparatus 10 according to a second example embodiment will be described with reference to FIG. 4 to FIG. 7. The second example embodiment is partially different from the first example embodiment only in the configuration and operation, and may be the same as the first example embodiment in the other parts. For this reason, a part that is different from the first example embodiment will be described in detail below, and a description of the other overlapping parts will be omitted as appropriate.

### (Functional Configuration)

First, with reference to FIG. 4, a functional configuration of the information processing apparatus 10 according to the second example embodiment will be described. FIG. 4 is a block diagram illustrating the functional configuration of the information processing apparatus according to the second example embodiment. In FIG. 4, the same components as those illustrated in FIG. 2 carry the same reference numerals.

As illustrated in FIG. 4, the information processing apparatus 10 according to the second example embodiment includes, as components for realizing the functions thereof, the deterioration degree calculation unit 110, the deterioration factor classification unit 120, the quality score calculation unit 130, and a weight setting unit 140. That is, the information processing apparatus 10 according to the second example embodiment further includes the weight setting unit 140 in addition to the configuration in the first example embodiment (see FIG. 2). The weight setting unit 140 may be a processing block realized or implemented by the processor 11 (see FIG. 1), for example.

The weight setting unit 140 is configured to set a weight (e.g., a weight coefficient) used in calculating the quality score. More specifically, the weight setting unit 140 is configured to set a weight corresponding to at least one of the deterioration degree calculated by the deterioration degree calculation unit 110 and the deterioration factor classified by the deterioration factor classification unit 120. For example, when the deterioration degree calculation unit 110 calculates a plurality of deterioration degrees by using a plurality of indices, the weight setting unit 140 may set a weight corresponding to each of the plurality of deterioration degrees. In addition, for example, when the deterioration factor classification unit 120 outputs a plurality of deterioration factors, the weight setting unit 140 may set a weight corresponding to each of the plurality of deterioration factors. A more specific method of setting the weight will be described in detail in another example embodiment later.

### (Flow of Operation)

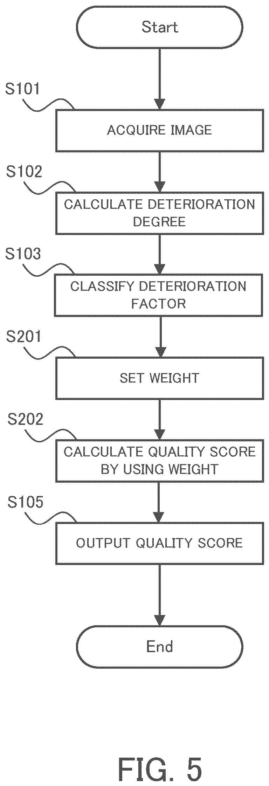

Next, with reference to FIG. 5, a flow of the operation of the information processing apparatus 10 according to the second example embodiment will be described. FIG. 5 is a flowchart illustrating the flow of the operation of the information processing apparatus according to the second example embodiment. In FIG. 5, the same steps as those illustrated in FIG. 3 carry the same reference numerals.

As illustrated in FIG. 5, when the operation of the information processing apparatus 10 according to the second example embodiment is started, first, each of the deterioration degree calculation unit 110 and the deterioration cause classification unit 120 acquires the image for calculating the quality score (step S101). Subsequently, the deterioration degree calculation unit 110 calculates the deterioration degree of the acquired image (step S102). In addition, the deterioration factor classification unit 120 classifies the deterioration factor of the acquired image (step S103).

Subsequently, the weight setting unit 140 sets the weight to be used to calculate the quality score (step S201). Thereafter, the quality score calculation unit 130 calculates the quality score on the basis of the deterioration degree calculated by the deterioration degree calculation unit 110 and the deterioration factor classified by the deterioration factor classification unit 120, by using the weight set by the weight setting unit 140 (step S202). Then, the quality score calculation unit 130 outputs the calculated quality score (step S105).

### (Configuration for Learning)

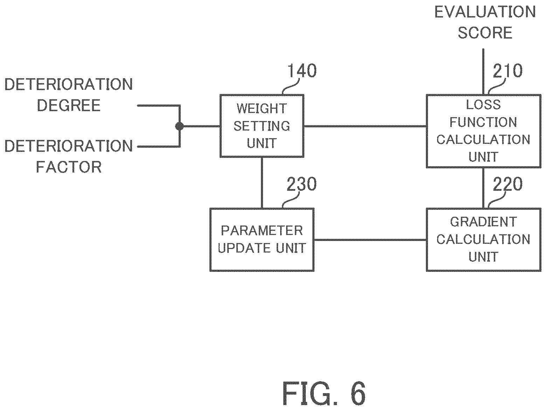

Next, with reference to FIG. 6, a configuration related to learning of the weight setting unit 140 will be described. FIG. 6 is a block diagram illustrating the configuration related to the learning of the weight setting unit.

In FIG. 6, the weight setting unit 140 may set the weight by using a previously learned/trained model (neural network, etc.). The weight setting unit 140 may be learned/trained by using a loss function calculation unit 210, a gradient calculation unit 220, and a parameter update unit 230. Each of the loss function calculation unit 210, the gradient calculation unit 220, and the parameter update unit 230 may be a processing block realized or implemented by the processor 11 (see FIG. 1), for example.

The loss function calculation unit 210 is configured to calculate a loss function set in advance. More specifically, the loss function calculation unit 210 is configured to calculate the loss function on the basis of the weight set by the weight setting unit 140 and an evaluation score to be inputted. The evaluation score here is a score for evaluating the weight set by the weight setting unit 140, and correct answer data corresponding to an input in the learning. The evaluation score may be a score to be compared to determine how appropriate the weight set by the weight setting unit 140 is, for example.

The gradient calculation unit 220 is configured to calculate a gradient of the loss function calculated by the loss function calculation unit 210. The gradient of the loss function is a value indicating a slope/inclination of a graph of the loss function, and may be a value determined by "error back propagation", for example. The gradient calculation unit 220 may calculate the gradient of the loss function by differentiating the loss function, for example.

The parameter update unit 230 is configured to update a parameter of the weight setting unit 140 (i.e., a parameter used in setting the weight). More specifically, the parameter update unit 230 is configured to update the parameter of the weight setting unit 140 to minimize the loss function by using the gradient calculated by the gradient calculation unit 220.

### (Learning Operation)

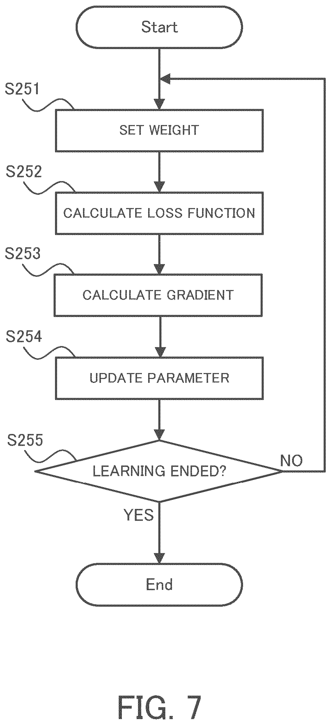

Next, with reference to FIG. 7, an operation in the learning of the weight setting unit 140 (hereinafter referred to as a "learning operation" as appropriate) will be described. FIG. 7 is a flowchart illustrating a flow of the learning operation of the weight setting unit.

As illustrated in FIG. 7, when the learning operation of the weight setting unit 140 is started, first, the weight setting unit 140 sets the weight corresponding to the deterioration degree and the deterioration factor (step S251). Then, the loss function calculation unit 210 calculates the loss function, by using the quality score calculated by using the weight set by the weight setting unit 140, and the evaluation score corresponding to the input in the learning (step S252).

Subsequently, the gradient calculation unit 220 calculates the gradient of the loss function calculated by the loss function calculation unit 210 (step S253). Thereafter, the parameter update unit 230 updates the parameter of the weight setting unit 140 to minimize the loss function by using the gradient calculated by the gradient calculation unit 220 (step S254).

Subsequently, the information processing apparatus 10 determines whether or not the learning is ended (step S255). Whether or not the learning is ended may be determined in accordance with a predetermined number of iterations, for example. When it is determined that learning is not ended (the step S255: NO), the processing is repeated from the step S251 again. When it is determined that the learning is ended (the step S255: YES), a series of operation steps is ended.

The above-described learning technique is an example, and the weight setting unit 140 may be learned by other techniques. Furthermore, the learning of the weight setting unit 140 may be performed before actual operation of the information processing apparatus 10, or in operation thereof (i.e., while calculating the quality score of the image).

### (Technical Effect)

Next, a technical effect obtained by the information processing apparatus 10 according to the second example embodiment will be described.

As described in FIG. 4 to FIG. 7, in the information processing apparatus 10 according to the second example embodiment, the quality score of the image is calculated by using the weight set by the weight setting unit 140. In this way, it is possible to calculate a more appropriate quality score by adjusting an influence of the deterioration degree and the deterioration factor on the quality score. For example, each authentication device (authentication engine) has different robustness against the deterioration factor (e.g., there are a blur-robust authentication device and an occlusion-robust authentication device). Therefore, in a case where it is possible to estimate the deterioration factor of the quality, it is possible to calculate the quality score corresponding to properties of an authentication device.

### <Third Example Embodiment>

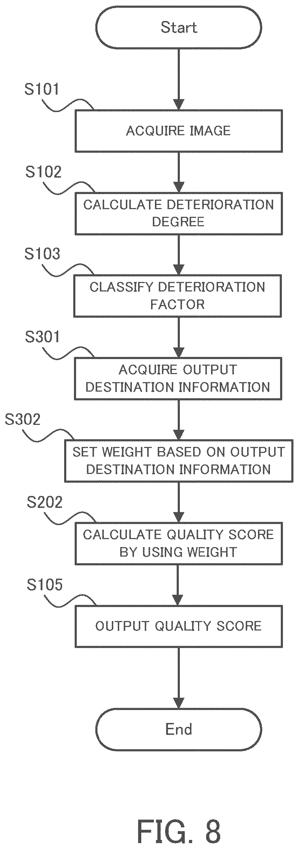

The information processing apparatus 10 according to a third example embodiment will be described with reference to FIG. 8. The third example embodiment is partially different from the second example embodiment only in the operation, and may be the same as the first and second example embodiments in the other parts. For this reason, a part that is different from each of the example embodiments described above will be described in detail below, and a description of the other overlapping parts will be omitted as appropriate.

### (Flow of Operation)

First, with reference to FIG. 8, a flow of the operation of the information processing apparatus 10 according to the third example embodiment will be described. FIG. 8 is a flowchart illustrating the flow of the operation of the information processing apparatus according to the third example embodiment. In FIG. 8, the same steps as those illustrated in FIG. 5 carry the same reference numerals.

As illustrated in FIG. 8, when the operation of the information processing apparatus 10 according to the third example embodiment is started, first, each of the deterioration degree calculation unit 110 and the deterioration cause classification unit 120 acquires the image for calculating the quality score (step S101). Subsequently, the deterioration degree calculation unit 110 calculates the deterioration degree of the acquired image (step S102). In addition, the deterioration factor classification unit 120 classifies the deterioration factor of the acquired image (step S103).

Subsequently, the weight setting unit 140 acquires information about an output destination to which at least one of the image and the quality score is outputted (hereinafter referred to as "output destination information" as appropriate) (step S301). The output destination information may include, for example, information about an apparatus to which the quality score is outputted, information about a use of the quality score at the output destination, or the like. For example, in a case where the quality score is outputted to an authentication apparatus that performs authentication processing, the output destination information may include information about the authentication apparatus that is the output destination, or information about the authentication processing to be performed by the authentication apparatus.

Subsequently, the weight setting unit 140 sets the weight on the basis of the acquired output destination information (step S302). The weight setting unit 140 sets the weight such that processing at the output destination is more properly performed, for example. For example, in a case where the image and the quality score are outputted to the authentication apparatus, thereby performing the authentication processing, the weight setting unit 140 sets the weight to maximize a performance of the authentication apparatus.

Subsequently, the quality score calculation unit 130 calculates the quality score on the basis of the deterioration degree calculated by the deterioration degree calculation unit 110 and the deterioration factor classified by the deterioration factor classification unit 120, by using the weight set by the weight setting unit 140 (here, the weight set on the basis of the output destination information) (step S202). Then, the quality score calculation unit 130 outputs the calculated quality score (step S105).

### (Technical Effect)

Next, a technical effect obtained by the information processing apparatus 10 according to the third example embodiment will be described.

As described in FIG. 8, in the information processing apparatus 10 concerning the third example embodiment, the weight in calculating the quality score is set on the basis of the output destination to which at least one of the image and the quality score is outputted. In this way, it is possible to calculate the quality score corresponding to a use at the output destination. For example, comparing a registration use of the iris image used for iris authentication (i.e., in a use when a registration image for authentication/verification is registered) and an authentication use (i.e., in a use when the image is authenticated/verified with a registration image for authentication), a higher quality is required for the registration use rather than for the authentication use, because the presence of a low-quality image in the registration image leads to the acceptance of others. As in this case, the required authentication accuracy and security level may vary depending on the use at the output destination. In the present example embodiment, however, it is possible to calculate an appropriate quality score in accordance with a difference in the use.

### <Fourth Example Embodiment>

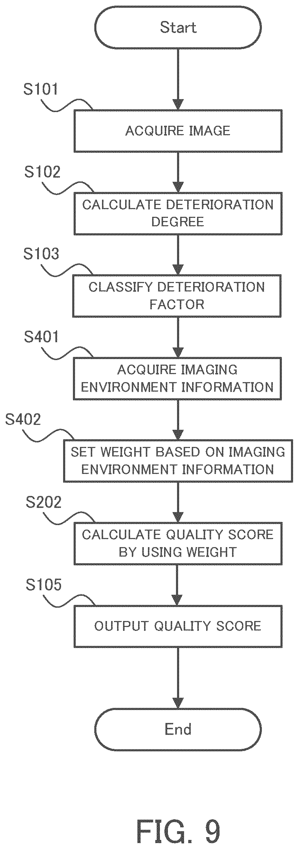

The information processing apparatus 10 according to a fourth example embodiment will be described with reference to FIG. 9. The fourth example embodiment is partially different from the second and third example embodiments only in the operation, and may be the same as the first to third example embodiments in the other parts. For this reason, a part that is different from each of the example embodiments described above will be described in detail below, and a description of the other overlapping parts will be omitted as appropriate.

### (Flow of Operation)

First, with reference to FIG. 9, a flow of operation of the information processing apparatus 10 according to the fourth example embodiment will be described. FIG. 9 is a flowchart illustrating the flow of the operation of the information processing apparatus according to the fourth example embodiment. In FIG. 9, the same steps as those illustrated in FIG. 5 carry the same reference numerals.

As illustrated in FIG. 9, when the operation of the information processing apparatus 10 according to the fourth example embodiment is started, first, each of the deterioration degree calculation unit 110 and the deterioration cause classification unit 120 acquires the image for calculating the quality score (step S101). Subsequently, the deterioration degree calculation unit 110 calculates the deterioration degree of the acquired image (step S102). In addition, the deterioration factor classification unit 120 classifies the deterioration factor of the acquired image (step S103).

Subsequently, the weight setting unit 140 acquires information about an environment in which the image is captured (hereinafter referred to as "imaging environment information" as appropriate) (step S401). The imaging environment information may include, for example, information about a camera that captures the image, information about an imaging place where the imaging is performed, information about a target to be imaged, or the like. For example, the imaging environment information may include information about various parameters of the camera (e.g., exposure, etc.). Alternatively, the imaging environment information may include information about brightness of the imaging place or a time zone in the imaging. Alternatively, the imaging environment information may include information about a size, height, moving velocity, or the like of the target to be imaged. The imaging environment information may be acquired (collected) by the weight setting unit 140 itself, for example. Alternatively, the imaging environment information may be collected by an imaging environment information collection unit that is separately provided, and stored in a database, from which the imaging environment information may be ready by the weight setting unit 140 as appropriate.

Subsequently, the weight setting unit 140 sets the weight on the basis of the acquired imaging environment information (step S402). The weight setting unit 140 may set the weight that takes into account the deterioration factor that may occur in a current imaging environment, for example. For example, in an imaging environment in which the blur deterioration is likely to occur, the weight setting unit 140 may set a large weight corresponding to the blur deterioration.

Subsequently, the quality score calculation unit 130 calculates the quality score on the basis of the deterioration degree calculated by the deterioration degree calculation unit 110 and the deterioration factor classified by the deterioration factor classification unit 120, by using the weight set by the weight setting unit 140 (here, the weight set on the basis of the imaging environment information) (step S202). Then, the quality score calculation unit 130 outputs the calculated quality score (step S105).

### (Technical Effect)

Next, a technical effect obtained by the information processing apparatus 10 according to the fourth example embodiment will be described.

As described in FIG. 9, in the information processing apparatus 10 according to the fourth example embodiment, the weight is changed in accordance with the environment in which the image is captured. In this way, it is possible to calculate an appropriate quality score in accordance with the imaging environment.

The above-described third and fourth example embodiments may be combined. That is, the weight setting unit 140 may set the weight on the basis of both the output destination information and the imaging environment information. The weight setting unit 140 may also set the weight by using another piece of information, in addition to the output destination information and the imaging environment information.

### <Fifth Example Embodiment>

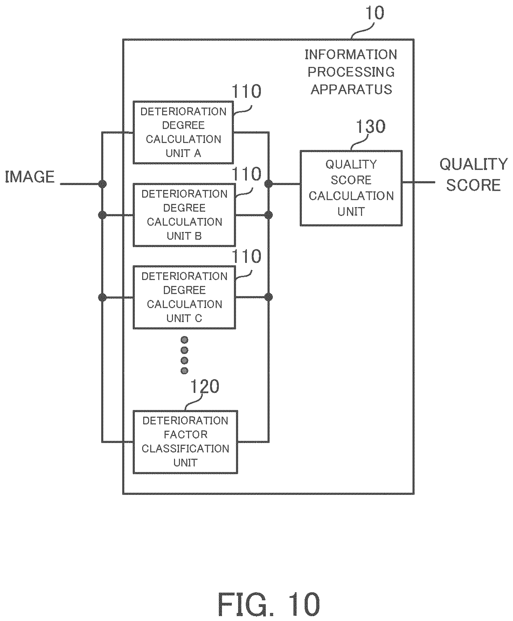

The information processing apparatus 10 according to a fifth example embodiment will be described with reference to FIG. 10. The fifth example embodiment is partially different from the first to fourth example embodiments only in the configuration, and may be the same as the first to fourth example embodiments in the other parts. For this reason, a part that is different from each of the example embodiments described above will be described in detail below, and a description of the other overlapping parts will be omitted as appropriate.

### (Functional Configuration)

First, with reference to FIG. 10, a functional configuration of the information processing apparatus 10 according to the fifth example embodiment will be described. FIG. 10 is a block diagram illustrating the functional configuration of the information processing apparatus according to the fifth example embodiment. In FIG. 10, the same components as those illustrated in FIG. 2 carry the same reference numerals.

As illustrated in FIG. 10, the information processing apparatus 10 according to the fifth example embodiment includes, as components for realizing the functions thereof, a plurality of deterioration degree calculation units 110, the deterioration factor classification unit 120, and the quality score calculation unit 130. That is, the information processing apparatus 10 according to the fifth example embodiment is different from the first example embodiment (see FIG. 2) in the configuration that it includes a plurality of deterioration degree calculation units 110. In FIG. 10, for convenience of explanation, a plurality of deterioration degree calculation units 110 are illustrated as deterioration degree calculation units A, B, C, and so on, but the number of deterioration degree calculation units 110 is not particularly limited. For example, two deterioration degree calculation unit 110 may be provided, or three or more may be provided.

The plurality of deterioration degree calculation units 110 are configured to calculate the deterioration degree(s) by using respective different indices. Therefore, the deterioration degree calculated from each of the plurality of deterioration degree calculation unit 110 may be different. For example, the plurality of deterioration degree calculation units 110 may be configured to calculate the deterioration degrees corresponding to different deterioration factors set in advance. More specifically, the deterioration degree calculation unit A may calculate a blur score (e.g., a score corresponding to the deterioration caused by at least one of the focus blur and the motion blur), whereas the deterioration degree calculation unit B may calculate an area score (e.g., a score corresponding to an effective area of the imaging target (e.g., an iris)).

Each of the plurality of deterioration degrees calculated by the plurality of deterioration degree calculation units 110 is outputted to the quality score calculation unit 130. Then, in the quality score calculation unit 130 according to the present example embodiment, the quality score is calculated on the basis of the plurality of deterioration degrees and deterioration factors. The weight setting unit 140 described in the second to fourth example embodiments may also be provided. In this case, the weight setting unit 140 may set the weight for each of the plurality of deterioration degree calculation units 110. For example, the weight setting unit 140 may set the weight coefficient corresponding to each of the deterioration degree calculation units A, B, and C.

### (Technical Effect)

Next, a technical effect obtained by the information processing apparatus 10 according to the fifth example embodiment will be described.

As described in FIG. 10, in the information processing apparatus 10 according to the fifth example embodiment, the plurality of deterioration degrees are calculated by the plurality of deterioration degree calculation units 110. In this way, it is possible to calculate a more appropriate quality score, as compared with a case where only one deterioration degree is used. For example, by using the deterioration degree calculated for each deterioration factor, it is possible to calculate the quality score that takes into account an influence of each deterioration factor. Furthermore, by additionally calculating the deterioration degree for a deterioration factor of interest, the deterioration degree may be estimated in detail for the deterioration factor of interest, and it is thus possible to calculate the quality score with higher accuracy. For example, when it is desired to estimate whether or not the eye is widely open with higher accuracy, it can be handled by including the deterioration degree related to the eye opening degree in the plurality of deterioration degree calculation units 110.

### <Sixth Example Embodiment>

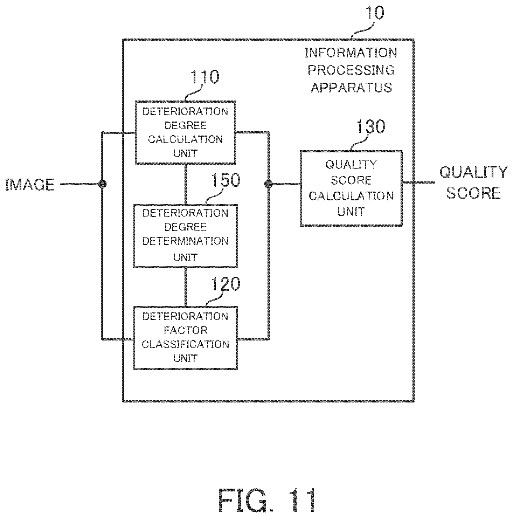

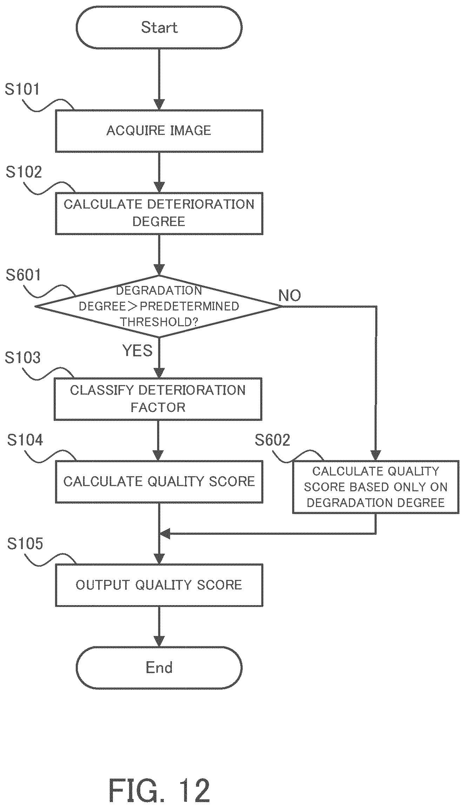

The information processing apparatus 10 according to a sixth example embodiment will be described with reference to FIG. 11 and FIG. 12. The sixth example embodiment is partially different from the first to fifth example embodiments only in the configuration and operation, and may be the same as the first to fifth example embodiments in the other parts. For this reason, a part that is different from each of the example embodiments described above will be described in detail below, and a description of the other overlapping parts will be omitted as appropriate.

### (Functional Configuration)

First, with reference to FIG. 11, a functional configuration of the information processing apparatus 10 according to the sixth example embodiment will be described. FIG. 11 is a block diagram illustrating the functional configuration of the information processing apparatus according to the sixth example embodiment. In FIG. 11, the same components as those illustrated in FIG. 2 carry the same reference numerals.

As illustrated in FIG. 11, the information processing apparatus 10 according to the sixth example embodiment includes, as components for realizing the functions thereof, the deterioration degree calculation unit 110, the deterioration factor classification unit 120, the quality score calculation unit 130, and a deterioration degree determination unit 150. That is, the information processing apparatus 10 according to the sixth example embodiment further includes the deterioration level determination unit 150 in addition to the configuration in the first example embodiment (see FIG. 2). The deterioration determination unit 150 may be a processing block realized or implemented by the processor 11 (see FIG. 1), for example.

The deterioration degree determination unit 150 is configured to determine whether or not the deterioration degree calculated by the deterioration degree calculation unit 110 is greater than or equal to a predetermined threshold. The "predetermined threshold" is set as a threshold for determining whether or not the deterioration degree of the image is large enough to determine that the deterioration factor should be classified. For example, the predetermined threshold may be set as a threshold for determining whether or not the deterioration degree of the image is high enough to influence the authentication processing using the quality score. A determination result of the deterioration degree determination unit 150 is configured to be outputted to the deterioration factor classification unit 120.

### (Flow of Operation)

Referring now to FIG. 12, a flow of operation of the information processing apparatus 10 according to the sixth example embodiment will be described. FIG. 12 is a flowchart illustrating the flow of operations of the information processing apparatus according to the sixth example embodiment. In FIG. 12, the same steps as those illustrated in FIG. 3 carry the same reference numerals.

As illustrated in FIG. 12, when the operation of the information processing apparatus 10 according to the sixth example embodiment is started, first, each of the deterioration degree calculation unit 110 and the deterioration cause classification unit 120 acquires the image for calculating the quality score (step S101). Subsequently, the deterioration degree calculation unit 110 calculates the deterioration degree of the acquired image (step S102).

Subsequently, the deterioration degree determination unit 150 determines whether or not the deterioration degree calculated by the deterioration degree calculation unit 110 is greater than the predetermined threshold (step S601). When it is determined that the deterioration degree is greater than the predetermined threshold (the step S601: YES), the deterioration factor classification unit 120 classifies the deterioration factor of the acquired image (step S103). Thereafter, the quality score calculation unit 130 calculates the quality score on the basis of the deterioration degree calculated by the deterioration degree calculation unit 110 and the deterioration factor classified by the deterioration factor classification unit 120 (step S104). Then, the quality score calculation unit 130 outputs the calculated quality score (step S105).

On the other hand, when it is determined that the deterioration degree is not greater than the predetermined threshold (the step S601: NO), the deterioration factor classification unit 120 does not classify the deterioration factor of the acquired image (i.e., the step S103 is omitted). In this instance, the quality score calculation unit 130 calculates the quality score based only on the deterioration degree calculated by the deterioration degree calculation unit 110 (step S602). Then, the quality score calculation unit 130 outputs the quality score calculated based only on the deterioration degree (step S105).

As described above, in the information processing apparatus 10 according to the sixth example embodiment, it is determined whether or not the deterioration factor is classified, depending on whether or not the deterioration degree is greater than the predetermined threshold. In the above example, the quality score is calculated based only on the deterioration degree when the classification of the deterioration factor is not performed, but the quality score may not be calculated when the classification of the deterioration factor is not performed.

### (Technical Effect)

Next, a technical effect obtained by the information processing apparatus 10 according to the sixth example embodiment will be described.

As described in FIG. 11 and FIG. 12, in the information processing apparatus 10 according to the sixth example embodiment, the deterioration factor is classified when the deterioration degree exceeds the predetermined threshold. In this way, it is possible to reduce a processing load required to classify the deterioration factor, as compared with a case where the deterioration factor is classified at all times.

### <Seventh Example Embodiment>

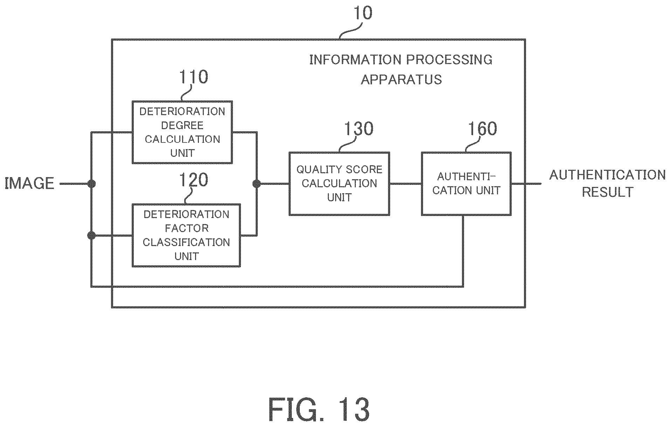

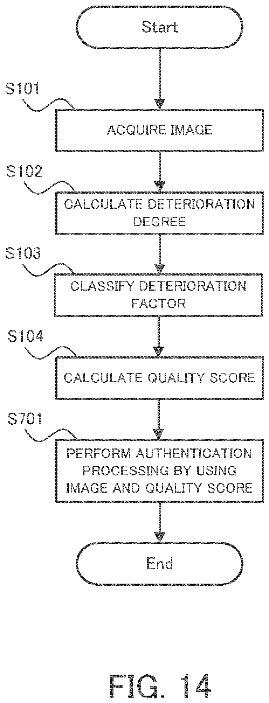

The information processing apparatus 10 according to a seventh example embodiment will be described with reference to FIG. 13 and FIG. 14. The seventh example embodiment is partially different from the first to sixth example embodiments only in the configuration and operation, and may be the same as the first to sixth example embodiments in the other parts. For this reason, a part that is different from each of the example embodiments described above will be described in detail below, and a description of the other overlapping parts will be omitted as appropriate.

### (Functional Configuration)

First, with reference to FIG. 13, a functional configuration of the information processing apparatus 10 according to the seventh example embodiment will be described. FIG. 13 is a block diagram illustrating the functional configuration of the information processing apparatus according to the seventh example embodiment. In FIG. 13, the same components as those illustrated in FIG. 2 carry the same reference numerals.

As illustrated in FIG. 13, the information processing apparatus 10 according to the seventh example embodiment includes, as components for realizing the functions thereof, the deterioration degree calculation unit 110, the deterioration factor classification unit 120, the quality score calculation unit 130, and an authentication unit 160. That is, the information processing apparatus 10 according to the seventh example embodiment further includes the authentication unit 160 in addition to the configuration in the first example embodiment (see FIG. 2). The authentication unit 160 may be a processing block realized or implemented by the processor 11 (see FIG. 1), for example.

The authentication unit 160 is configured to perform authentication processing using the image. The type of the authentication processing performed by the authentication unit 160 is not particularly limited, but may be, for example, iris authentication using an iris image or face authentication using a face image. In such a case, the authentication unit 160 may determine whether or not authentication is allowed by authenticating/verifying an image of an authentication target with a registration image registered in advance. The authentication unit 160 according to the present example embodiment, uses the quality score calculated by the quality score calculation unit 130, in addition to the image in the authentication processing. The authentication unit 160 may use the quality score to output an authentication result (i.e., to determine whether or not the authentication is allowed), or may use the quality score to evaluate the authentication result. For example, as the authentication result, when the authentication is failed, the authentication unit 160 may use the quality score to determine whether or not the failure is caused by the deterioration in the quality of the image. Alternatively, the authentication unit 160 may use the quality score as a degree of reliability for the authentication result (e.g., when the quality score is high, but an authentication score is low, or when it is highly likely that there is no registration data, etc.). How the authentication unit 160 uses the quality score in the authentication processing, however, is not limited to the above example. Another method of using the quality score in the authentication processing will be described in detail in another example embodiment later.

### (Flow of Operation)

Referring now to FIG. 14, a flow of operation of the information processing apparatus 10 according to the seventh example embodiment will be described. FIG. 14 is a flowchart illustrating the flow of the operation of the information processing apparatus according to the seventh example embodiment. In FIG. 14, the same steps as those illustrated in FIG. 3 carry the same reference numerals.

As illustrated in FIG. 14, when the operation of the information processing apparatus 10 according to the seventh example embodiment is started, first, each of the deterioration degree calculation unit 110 and the deterioration cause classification unit 120 acquires the image calculating the quality score (here, in particular, the image used for the authentication processing) (step S101). Subsequently, the deterioration degree calculation unit 110 calculates the deterioration degree of the acquired image (step S102). In addition, the deterioration factor classification unit 120 classifies the deterioration factor of the acquired image (step S103).

Subsequently, the quality score calculation unit 130 calculates the quality score on the basis of the deterioration degree calculated by the deterioration degree calculation unit 110 and the deterioration factor classified by the deterioration factor classification unit 120 (step S104). The quality score calculated by the quality score calculation unit 130 is outputted to the authentication unit 160.

Subsequently, the authentication unit 160 performs the authentication processing on the basis of the image and the quality score (step S701). That is, in the authentication processing performed by the authentication unit 160, not only the image itself, but also the quality score of the image (in other words, the deterioration degree and the deterioration factor of the image) is considered.

### (Technical Effect)

Next, a technical effect obtained by the information processing apparatus 10 according to the seventh example embodiment will be described.

As described in FIG. 13 and FIG. 14, in the information processing apparatus 10 according to the seventh example embodiment, the authentication processing is performed by using the image and the quality score. In this way, the quality score of the image is also considered in the authentication processing, and it is thus possible to perform more appropriate authentication processing, as compared with a case where only the image is used.

### <Eighth Example Embodiment>

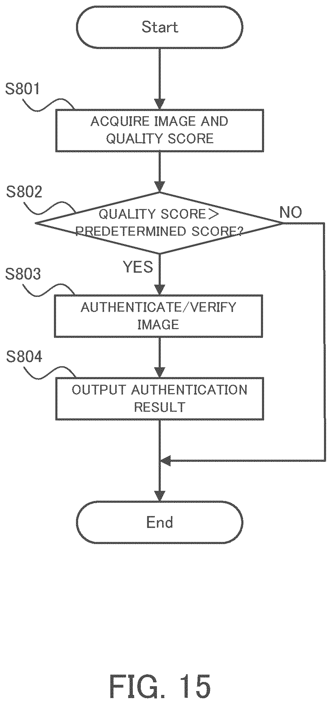

The information processing apparatus 10 according to an eighth example embodiment will be described with reference to FIG. 15. The eighth example embodiment describes a specific example of an authentication operation (i.e., an operation of the authentication unit 160) in the seventh example embodiment, and may be the same as the first to seventh example embodiments in the other parts. For this reason, a part that is different from each of the example embodiments described above will be described in detail below, and a description of the other overlapping parts will be omitted as appropriate.

### (Authentication Operation)

First, with reference to FIG. 15, a flow of the authentication operation by the information processing apparatus 10 according to the eighth example embodiment will be described. FIG. 15 is a flowchart illustrating the flow of the authentication operation by the information processing apparatus according to the eighth example embodiment.

As illustrated in FIG. 15, when the authentication operation by the information processing apparatus 10 according to the eighth example embodiment is started, first, the authentication unit 160 acquires the image and the quality score (step S801). Then, the authentication unit 160 determines whether the quality score is higher than a predetermined score (step S802). The "predetermined score" here is set as a threshold for determining whether or not the quality score is high enough to properly perform the authentication processing.

When the quality score is higher than the predetermined score (the step S802: YES), the authentication part 160 authenticates/verifies the acquired image with the registration image (step S803), and outputs the authentication result (step S804). That is, depending on a verification result of the image, whether the authentication is successful or failed, is outputted.

On the other hand, when the quality score is lower than the predetermined score (the step S802: NO), the authentication unit 160 does not perform the authentication processing (i.e., the step S803 and the step S804 are omitted). In this instance, the authentication unit 160 may output the result as an authentication failure. Alternatively, the authentication unit 160 may output information giving an instruction to re-capture an image.

### (Technical Effect)

Next, a technical effect obtained by the information processing apparatus 10 according to the eighth example embodiment will be described.

As described in FIG. 15, in the information processing apparatus 10 according to the eighth example embodiment, the authentication/verification of the image is performed when the quality score is higher than the predetermined score. In this way, it is possible to prevent that the accuracy of the authentication processing is reduced due to the authentication/verification using a lower-quality image.

### <Ninth Example Embodiment>

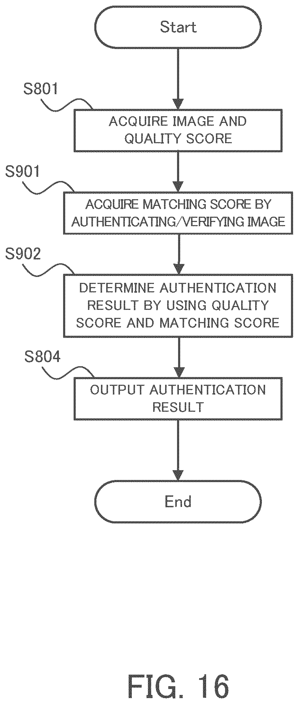

The information processing apparatus 10 according to a ninth example embodiment will be described with reference to FIG. 16. The ninth example embodiment, as in the eighth example embodiment, describes a specific example of the authentication operation in the seventh example embodiment, and may be the same as the first to eighth example embodiments in the other parts. For this reason, a part that is different from each of the example embodiments described above will be described in detail below, and a description of the other overlapping parts will be omitted as appropriate.

### (Authentication Operation)

First, with reference to FIG. 16, a flow of the authentication operation by the information processing apparatus 10 according to the ninth example embodiment will be described. FIG. 16 is a flowchart illustrating the flow of the authentication operation by the information processing apparatus according to the ninth example embodiment. In FIG. 16, the same steps as those illustrated in FIG. 15 carry the same reference numerals.

As illustrated in FIG. 16, when the authentication operation by the information processing apparatus 10 according to the ninth example embodiment is started, first, the authentication unit 160 acquires the image and the quality score (step S801). The authentication unit 160 acquires a matching score by authenticating/verifying the acquired image with the registration image (step S901). The matching score here may indicate a degree of matching between the acquired image and the registration image, for example.

Subsequently, the authentication unit 160 determines the authentication result by using the quality score and the matching score (step S903) and outputs the authentication result (step S804). For example, the authentication unit 160 may separately perform the determination based on the quality score and the determination based on the matching score, and determines that the authentication is successful when conditions are cleared in both the determinations. Alternatively, the authentication unit 160 may calculate an integrated score for authentication by using the quality score and the matching score, and may determine the authentication result by using the integrated score for authentication.

### (Technical Effect)

Next, a technical effect obtained by the information processing apparatus 10 according to the ninth example embodiment will be described.

As described in FIG. 16, in the information processing apparatus 10 according to the ninth example embodiment, the result of the authentication processing (e.g., whether the authentication is successful or failed) is determined by using both the quality score and the matching score. In this way, the deterioration degree and the deterioration factors are considered in the authentication processing by using the quality score. Therefore, it is possible to improve the accuracy of the authentication processing, as compared with a case where the result of the authentication processing is determined by using only the matching score (e.g., the degree of matching of the image).

### <Tenth Example Embodiment>

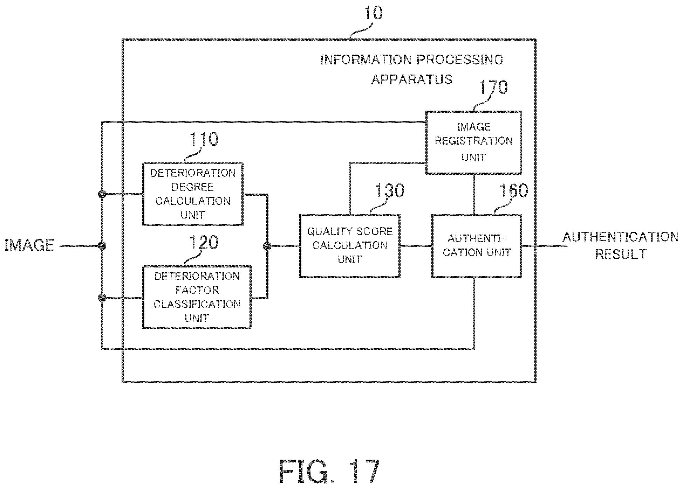

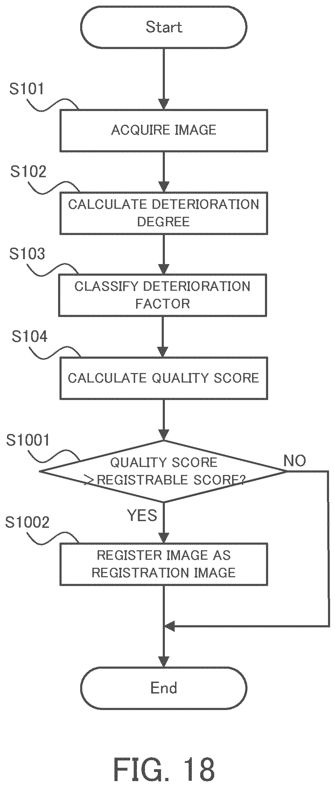

The information processing apparatus 10 according to the tenth example embodiment will be described with reference to FIG. 17 and FIG. 18. The tenth example embodiment is partially different from the seventh example embodiment only in the configuration and operation, and may be the same as the first to ninth example embodiments in the other parts. For this reason, a part that is different from each of the example embodiments described above will be described in detail below, and a description of the other overlapping parts will be omitted as appropriate.

### (Functional Configuration)

First, with reference to FIG. 17, a functional configuration of the information processing apparatus 10 according to the tenth example embodiment will be described. FIG. 17 is a block diagram illustrating the functional configuration of the information processing apparatus according to the tenth example embodiment. In FIG. 17, the same components as those illustrated in FIG. 13 carry the same reference numerals.

As illustrated in FIG. 17, the information processing apparatus 10 according to the tenth example embodiment includes, as components for realizing the functions, the deterioration degree calculation unit 110, the deterioration factor classification unit 120, the quality score calculation unit 130, the authentication unit 160, and an image registration unit 170. That is, the information processing apparatus 10 according to the tenth example embodiment further includes the image registration unit 170 in addition to the configuration in the tenth example embodiment (see FIG. 13). The image registration unit 170 may be an processing block realized or implemented by the processor 11 (see FIG. 1), for example.

The image registration unit 170 is configured to register the registration image used for the authentication processing by the authentication unit 160. The image registration unit 170 may register the registration image in the storage apparatus 14 (see FIG. 1), for example. Alternatively, the image registration unit 170 may register the registration image in a storage apparatus external to the apparatus. Especially, the image registration unit 170 according to the present example embodiment is configured to determine whether or not the registration of the registration image is possible, on the basis of the quality score calculated by the quality score calculation unit 130. For example, the image registration unit 170 may register the acquired image as the registration image when the quality score exceeds a registrable score set in advance.

### (Flow of Operation)

Next, with reference to FIG. 18, a flow of operation of the information processing apparatus 10 according to the tenth example embodiment will be described. FIG. 18 is a flowchart illustrating the flow of the operation of the information processing apparatus according to the tenth example embodiment. In FIG. 18, the same steps as those illustrated in FIG. 3 carry the same reference numerals.

As illustrated in FIG. 18, when the operation of the information processing apparatus 10 according to the tenth example embodiment is started, first, each of the deterioration degree calculation unit 110 and the deterioration factor classification unit 120 acquires the image for calculating the quality score (here, in particular, the image registered as the registration image) (step S101). Subsequently, the deterioration degree calculation unit 110 calculates the deterioration degree of the acquired image (step S102). In addition, the deterioration factor classification unit 120 classifies the deterioration factor of the acquired image (step S103).

Subsequently, the quality score calculation unit 130 calculates the quality score on the basis of the deterioration degree calculated by the deterioration degree calculation unit 110 and the deterioration factor classified by the deterioration factor classification unit 120 (step S104). The quality score calculated by the quality score calculation unit 130 is outputted to the image registration unit 170.

Subsequently, the image registration unit 170 determines whether or not the quality score is higher than the registrable score (step S1001). Then, when the quality score is higher than the registrable score (the step S1001: YES), the image registration unit 170 registers the acquired image as the registration image (step S1002). On the other hand, when the quality score is lower than the registrable score (the step S1001: NO), the image registration unit 170 does not register the acquired image as the registrable image (i.e., the step S1002 is omitted). In this case, information giving an instruction to acquire (capture) a new image may be outputted.

### (Technical Effect)

Next, a technical effect obtained by the information processing apparatus 10 according to the tenth example embodiment will be described.

As described in FIG. 17 and FIG. 18, in the information processing apparatus 10 according to the tenth example embodiment, whether or not the registration of the image is possible, is determined on the basis of the quality score. In this way, it is possible to prevent that the accuracy of the authentication processing is reduced due to the registration of a low-quality image.

### <Eleventh Example Embodiment>

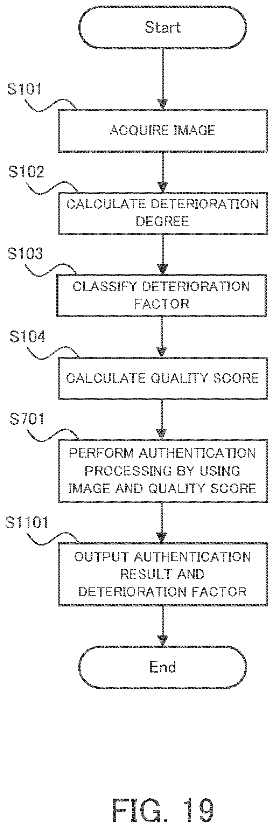

The information processing apparatus 10 according to an eleventh example embodiment will be described with reference to FIG. 19. The eleventh example embodiment is partially different from the seventh example embodiment only in the operation, and may be the same as the first to tenth example embodiments in the other parts. For this reason, a part that is different from each of the example embodiments described above will be described in detail below, and a description of the other overlapping parts will be omitted as appropriate.

### (Flow of Operation)

First, with reference to FIG. 19, a flow of operation of the information processing apparatus 10 according to the eleventh example embodiment will be described. FIG. 19 is a flowchart illustrating the flow of the operation of the information processing apparatus according to the eleventh example embodiment. In FIG. 19, the same steps as those illustrated in FIG. 14 carry the same reference numerals.

As illustrated in FIG. 19, when the operation of the information processing apparatus 10 according to the eleventh example embodiment is started, first, each of the deterioration degree calculation unit 110 and the deterioration cause classification unit 120 acquires the image for calculating the quality score (here, in particular, the image used for the authentication processing) (step S101). Subsequently, the deterioration degree calculation unit 110 calculates the deterioration degree of the acquired image (step S102). In addition, the deterioration factor classification unit 120 classifies the deterioration factor of the acquired image (step S103).

Subsequently, the quality score calculation unit 130 calculates the quality score on the basis of the deterioration degree calculated by the deterioration degree calculation unit 110 and the deterioration factor classified by the deterioration factor classification unit 120 (step S104). The quality score calculated by the quality score calculation unit 130 is outputted to the authentication unit 160.

Subsequently, the authentication unit 160 performs the authentication processing on the basis of the image and the quality score (step S701). Especially, the authentication unit 160 according to the present example embodiment outputs the authentication result and the deterioration factor (step 51101). That is, the authentication unit 160 outputs the deterioration factor classified by the deterioration factor classification unit 120, in addition to information indicating whether or not the authentication processing is successful or failed.

The authentication result and the deterioration factor may be outputted by using the output apparatus 16 (see FIG. 1), for example. More specifically, the authentication result and the deterioration factor may be image-displayed by using a display or the like. Alternatively, the authentication result and the deterioration factor may be audio-outputted by using a speaker or the like. The authentication result and the deterioration factor may be outputted in different aspects. For example, the authentication result may be image-displayed by using a display or the like, whereas the deteriorating factor may be audio-outputted by using a speaker or the like. The authentication result and the deterioration factor may be outputted simultaneously, or may be outputted in different timing.

### (Technical Effect)

Next, a technical effect obtained by the information processing apparatus 10 according to the eleventh example embodiment will be described.

As described in FIG. 19, in the information processing apparatus 10 according to the eleventh example embodiment, the deteriorating factor of the image is outputted in addition to the authentication result. In this way, the deterioration factor of the image may be transmitted to the user of the apparatus. Therefore, for example, when the image is captured again, it is possible to properly inform the user of matters to be improved, such as how the quality of the image can be improved.

### <Twelfth Example Embodiment>

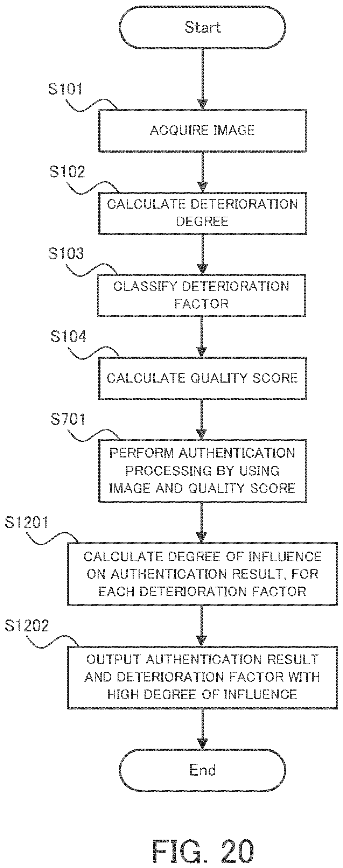

The information processing apparatus 10 according to a twelfth example embodiment will be described with reference to FIG. 20. The twelfth example embodiment is partially different from the eleventh example embodiment only in the operation, and may be the same as the first to eleventh example embodiments in the other parts. For this reason, a part that is different from each of the example embodiments described above will be described in detail below, and a description of the other overlapping parts will be omitted as appropriate.

### (Flow of Operation)

First, with reference to FIG. 20, a flow of operation of the information processing apparatus 10 according to the twelfth example embodiment will be described. FIG. 20 is a flowchart illustrating the flow of the operation of the information processing apparatus according to the twelfth example embodiment. In FIG. 20, the same steps as those illustrated in FIG. 14 carry the same reference numerals.

As illustrated in FIG. 20, when the operation of the information processing apparatus 10 according to the twelfth example embodiment is started, first, each of the deterioration degree calculation unit 110 and the deterioration factor classification unit 120 acquires the image for calculating the quality score (here, in particular, the image used for the authentication processing) (step S101). Subsequently, the deterioration degree calculation unit 110 calculates the deterioration degree of the acquired image (step S102). In addition, the deterioration factor classification unit 120 classifies the deterioration factor of the acquired image (step S103).

Subsequently, the quality score calculation unit 130 calculates the quality score on the basis of the deterioration degree calculated by the deterioration degree calculation unit 110 and the deterioration factor classified by the deterioration factor classification unit 120 (step S104). The quality score calculated by the quality score calculation unit 130 is outputted to the authentication unit 160.

Subsequently, the authentication unit 160 performs the authentication processing on the basis of the image and the quality score (step S701). Especially, the authentication unit 160 according to the present example embodiment calculates a degree of influence on the authentication result, for each deterioration factor (step S1201). Specifically, the authentication unit 160 calculates the degree of influence on the authentication result, for each of the deterioration factors classified by the deterioration factor classification unit 120. A specific method of calculating the degree of influence may employ the existing technologies/techniques as appropriate.

Subsequently, the authentication unit 160 outputs the deterioration factor with a high degree of influence on the authentication processing, together with the authentication result (step S1202). That is, the authentication unit 160 changes an output aspect of the deterioration factor that is outputted together with the authentication result, in accordance with the degree of influence. For example, the authentication unit 160 may output only the deterioration factor that the degree of influence exceeds a predetermined value, out of a plurality of deterioration factors. Alternatively, the authentication unit 160 may extract and output a predetermined number of deterioration factors in descending order of the degree of influence. Alternatively, the authentication unit 160 may change a display aspect of the deterioration factor in accordance with the degree of influence. For example, the deterioration factor with a high degree of influence may be highlighted (e.g., displayed in a conspicuous color or large characters), whereas the deterioration factor with a low degree of influence may be normally displayed. Alternatively, the deterioration factor with a low degree of influence may be displayed not to be conspicuous (e.g., displayed in light color).

### (Technical Effect)

Next, a technical effect obtained by the information processing apparatus 10 according to the twelfth example embodiment will be described.

As described in FIG. 20, in the information processing apparatus 10 according to the twelfth example embodiment, among the deterioration factors of the image, those with a higher degree of influence on the authentication result, are outputted. In this way, it is possible to inform the user of matters to be improved, more properly, as compared with a case where all the deterioration factors are outputted in the same manner. In addition, properties of the authentication unit 160 may be clarified by informing the user of the degree of influence of the deterioration factor in the authentication processing. Furthermore, it is possible to efficiently improve the quality. For example, in some cases, by improving only the deteriorating factor with a high degree of influence on the authentication processing, it may be not necessary to improve the deteriorating factor with a low degree of influence (i.e., sufficient authentication accuracy may be obtained without improving all the deteriorating factors).

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal.

### <Supplementary Notes>

The example embodiments described above may be further described as, but not limited to, the following Supplementary Notes below.

### (Supplementary Note 1)

An information processing apparatus according to Supplementary Note 1 is an information processing apparatus including: a deterioration degree calculation unit that calculates a deterioration degree in quality of an image; a deterioration factor classification unit that classifies a deterioration factor that is a factor of deterioration in the quality of the image; and a quality score calculation unit that calculates a quality score indicating the quality of the image, on the basis of the deterioration degree and the deterioration factor.

### (Supplementary Note 2)

An information processing apparatus according to Supplementary Note 2 is the information processing apparatus according to Supplementary Note 1, further including a weight setting unit that sets a weight corresponding to at least one of the deterioration degree and the deterioration factor, wherein the quality score calculation unit calculates the quality score on the basis of the deterioration degree, the deterioration factor, and the weight.

### (Supplementary Note 3)

An information processing apparatus according to Supplementary Note 3 is the information processing apparatus according to Supplementary Note 2, wherein the weight setting unit sets the weight on the basis of information about an output destination to which at least one of the image and the quality score is outputted.

### (Supplementary Note 4)

An information processing apparatus according to Supplementary Note 4 is the information processing apparatus according to Supplementary Note 2 or 3, wherein the weight setting unit changes the weight in accordance with an environment when the image is captured.

### (Supplementary Note 5)

An information processing apparatus according to Supplementary Note 5 is the information processing apparatus according to any one of Supplementary Notes 1 to 4, wherein the deterioration degree calculation unit calculates a plurality of deterioration degrees by using a plurality of indices that are different from each other.

### (Supplementary Note 6)

An information processing apparatus according to Supplementary Note 6 is the information processing apparatus according to any one of Supplementary Notes 1 to 5, further including a deterioration degree determination unit that determines whether or not the deterioration degree is higher than a predetermined threshold, wherein the deterioration factor classification unit classifies the deterioration factor when the deterioration degree is determined to be higher than the predetermined threshold.

### (Supplementary Note 7)

An information processing apparatus according to Supplementary Note 7 is the information processing apparatus according to any one of Supplementary Notes 1 to 6, further including an authentication unit that performs authentication processing relating to a target included in the image, by using the image and the quality score.

### (Supplementary Note 8)

An information processing apparatus according to Supplementary Note 8 is the information processing apparatus according to Supplementary Note 7, wherein the authentication unit determines whether or not execution of the authentication processing is possible on the basis of the quality score, and performs the authentication processing when the execution is determined to be possible.

### (Supplementary Note 9)

An information processing apparatus according to Supplementary Note 9 is the information processing apparatus according to Supplementary Note 7 or 8, wherein the authentication unit calculates a matching score from the image, and outputs a result of the authentication processing based on the matching score and the quality score.

### (Supplementary Note 10)

An information processing apparatus according to Supplementary Note 10 is the information processing apparatus according to any one of Supplementary Notes 7 to 9, further comprising an image registration unit that registers a registration image used in the authentication processing, wherein the image registration unit determines whether or not registration of the registration image is possible on the basis of the quality score.

### (Supplementary Note 11)

An information processing apparatus according to Supplementary Note 11 is the information processing apparatus according to any one of Supplementary Notes 7 to 10, wherein the authentication unit outputs the deterioration factor, together with a result of the authentication processing.

### (Supplementary Note 12)

An information processing apparatus according to Supplementary Note 12 is the information processing apparatus according to Supplementary Note 11, wherein the authentication unit calculates a degree of influence on the authentication processing for each deterioration factor, and outputs the deterioration factor in accordance with the degree of influence.

### (Supplementary Note 13)

An information processing method according to Supplementary Note 13 is an information processing method that is executed by at least one computer, the information processing method including: calculating a deterioration degree in quality of an image; classifying a deterioration factor that is a factor of deterioration in the quality of the image; and calculating a quality score indicating the quality of the image, on the basis of the deterioration degree and the deterioration factor.

### (Supplementary Note 14)

A recording medium according to Supplementary Note 14 is a recording medium on which a computer program that allows at least one computer to execute an information processing method is recorded, the information processing method including: calculating a deterioration degree in quality of an image; classifying a deterioration factor that is a factor of deterioration in the quality of the image; and calculating a quality score indicating the quality of the image, on the basis of the deterioration degree and the deterioration factor.

### (Supplementary Note 15)

An information processing system according to Supplementary Note 15 is an information processing system including: a deterioration degree calculation unit that calculates a deterioration degree in quality of an image; a deterioration factor classification unit that classifies a deterioration factor that is a factor of deterioration in the quality of the image; and a quality score calculation unit that calculates a quality score indicating the quality of the image, on the basis of the deterioration degree and the deterioration factor.

### (Supplementary Note 16)

A computer program according to Supplementary Note 16 is a computer program that allows at least one computer to execute an information processing method, the information processing method including: calculating a deterioration degree in quality of an image; classifying a deterioration factor that is a factor of deterioration in the quality of the image; and calculating a quality score indicating the quality of the image, on the basis of the deterioration degree and the deterioration factor.

This disclosure is allowed to be changed, if desired, without departing from the essence or spirit of this disclosure which can be read from the claims and the entire specification. An information processing apparatus, an information processing method, and a recording medium with such changes are also intended to be within the technical scope of this disclosure.

### Description of Reference Codes

10 Information processing apparatus
11 Processor
14 Storage apparatus
16 Output apparatus
110 Deterioration degree calculation unit
120 Deterioration factor classification unit
130 Quality score calculation unit
140 Weight setting unit
150 Deterioration degree determination unit
160 Authentication unit
170 Image registration unit
210 Loss function calculation unit
220 Gradient calculation unit
230 Parameter update unit

## Claims

1. An information processing apparatus comprising:
a deterioration degree calculation unit that calculates a deterioration degree in quality of an image;
a deterioration factor classification unit that classifies a deterioration factor that is a factor of deterioration in the quality of the image; and
a quality score calculation unit that calculates a quality score indicating the quality of the image, on the basis of the deterioration degree and the deterioration factor.

2. The information processing apparatus according to claim 1, further comprising a weight setting unit that sets a weight corresponding to at least one of the deterioration degree and the deterioration factor, wherein
the quality score calculation unit calculates the quality score on the basis of the deterioration degree, the deterioration factor, and the weight.

3. The information processing apparatus according to claim 2, wherein the weight setting unit sets the weight on the basis of information about an output destination to which at least one of the image and the quality score is outputted.

4. The information processing apparatus according to claim 2 or 3, wherein the weight setting unit changes the weight in accordance with an environment when the image is captured.

5. The information processing apparatus according to any one of claims 1 to 4, wherein the deterioration degree calculation unit calculates a plurality of deterioration degrees by using a plurality of indices that are different from each other.

6. The information processing apparatus according to any one of claims 1 to 5, further comprising a deterioration degree determination unit that determines whether or not the deterioration degree is higher than a predetermined threshold, wherein
the deterioration factor classification unit classifies the deterioration factor when the deterioration degree is determined to be higher than the predetermined threshold.

7. The information processing apparatus according to any one of claims 1 to 6, further comprising an authentication unit that performs authentication processing relating to a target included in the image, by using the image and the quality score.

8. The information processing apparatus according to claim 7, wherein the authentication unit determines whether or not execution of the authentication processing is possible on the basis of the quality score, and performs the authentication processing when the execution is determined to be possible.

9. The information processing apparatus according to claim 7 or 8, wherein the authentication unit calculates a matching score from the image, and outputs a result of the authentication processing based on the matching score and the quality score.

10. The information processing apparatus according to any one of claims 7 to 9, further comprising an image registration unit that registers a registration image used in the authentication processing, wherein
the image registration unit determines whether or not registration of the registration image is possible on the basis of the quality score.

11. The information processing apparatus according to any one of claims 7 to 10, wherein the authentication unit outputs the deterioration factor, together with a result of the authentication processing.

12. The information processing apparatus according to claim 11, wherein the authentication unit calculates a degree of influence on the authentication processing for each deterioration factor, and outputs the deterioration factor in accordance with the degree of influence.

13. An information processing method that is executed by at least one computer, the information processing method comprising:
calculating a deterioration degree in quality of an image;
classifying a deterioration factor that is a factor of deterioration in the quality of the image; and
calculating a quality score indicating the quality of the image, on the basis of the deterioration degree and the deterioration factor.

14. A recording medium on which a computer program that allows at least one computer to execute an information processing method is recorded, the information processing method including:
calculating a deterioration degree in quality of an image;
classifying a deterioration factor that is a factor of deterioration in the quality of the image; and
calculating a quality score indicating the quality of the image, on the basis of the deterioration degree and the deterioration factor.
